# EUROPEAN PATENT SPECIFICATION

(11) **EP 2 595 077 B1**
(45) Date of publication and mention of the grant of the patent: **20.04.2016**
(21) Application number: 11189293.1
(22) Date of filing: 16.11.2011
(51) Int. Cl.: G06F 21/10

(54) **Method and system for digital contents lending**
Verfahren und System zum Verleih digitaler Inhalte
Procédé et système pour prêter des contenus numériques

(43) Date of publication of application: 22.05.2013
(73) Proprietor: ALCATEL LUCENT, 92100 Boulogne-Billancourt (FR)
(72) Inventor: Beauvais, Mathieu, 93620 Nozay (FR); Robinson, Julien, 93620 Nozay (FR)
(74) Representative: Sciaux, Edmond

(56) References cited:
- EP-A1- 2 009 566
- EP-A1- 2 216 910
- EP-A2- 1 903 467

## Description

### FIELD OF THE INVENTION

This invention relates generally to protected digital contents handling.

### BACKGROUND OF THE INVENTION

By offering new ways of sale, lending and disseminating, it seems apparent that the rapid growth of electronic communications networks and the widespread use of end-user electronic devices present an immense opportunity for digital contents providers.

A digital content relates, here, to any transferable content from one electronic device to another one, such as a movie, a music file, a software application, or more generally any file or directory. The term "electronic device" is meant broadly and not restrictively, to include any system able to render a digital content (a computer, a personal digital assistant, a smartphone, a digital audio player, an e-book reader, a tablet computer for example).

In this regards, different business models have been developed governing commercial digital contents distribution. However, it is worthwhile to mention that such business models stand up only if Digital Rights Management contracts - specified by content providers - are fully respected by consumers. Otherwise, illegal copying and unlimited distribution on massive scales of a digital content surely undermine its business model and its content provider rights.

In fact, the ability of anyone - potentially malicious end-users - to make perfect copies and the ease by which those copies can be distributed (i.e. sold, lent, offered or shared) facilitate misuse and piracy.

Accordingly, among main issues that limit the expansion of digital content distribution, as expected by content providers, is the absence of a management method for digital content transfer between electronic devices, particularly in connection with lending, or any other authorized distribution form of a legally obtained digital content.

Thus, the major challenge for digital content providers is to seek ways whereby secure and widespread distribution - mainly lending - between users of copyrighted digital contents may be possible without DRM violation (i.e. ensuring, for example, that an ebook lending will not result in widespread piracy), making the establishment of a copyright-respecting method for digital contents lending between users an urgent need.

European patent application EP 1 903 467 A2 discloses a method for transmitting and receiving inter-device content right objects.

European patent application EP 2 216 910 A1 discloses a method an equipment for configuring radio communications.

An object of the present invention is to prevent illegal distribution of copyrighted digital contents, while benefiting from flexibility of content usage promised by mobile electronic devices.

Another object of the present invention is to preserve the business model of digital content distribution over mobile communications networks.

Another object of the present invention is to expand lending markets of digital contents.

Another object of the present invention is to enforce DRM fulfillment after that contents have been distributed to end-users.

Another object of the present invention is to provide an ease-of-use method for digital contents lending between end-users while DRM fulfilling.

Another object of the present invention is to provide a copyright-respecting method for digital contents transfer between users.

### DESCRIPTION OF THE DRAWING

The objects, advantages and other features of the present invention will become more apparent from the following disclosure and claims. The following non-restrictive description of preferred embodiments is given for the purpose of exemplification only with reference to the accompanying drawing in which
- figure 1 is a block diagram illustrating functional modules of an end-user device according to a preferred embodiment; and
- figure 2 shows illustrative method steps for a DRM-respecting transfer of a protected digital content between two end-user devices.

### SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key of critical elements of the invention or to delineate the scope of the invention. Its sole purpose is to present some concepts in a simplified form as a prelude to the more detailed description that is discussed later.

The present invention relates to a method for transferring a digital right management-protected digital content from a first device to a second device, said first and second devices respectively comprising a contact point, a contact communication unit and a standard communication functionality, said digital content being protected by a digital right management module and the digital right management license, said method comprising the following steps:
- sending a code from the first device to the second device ;
- activating the contact point and the contact communication unit of the first device;
- if there is a physical contact between the contact point of the first device and the contact point of the second device within a predefined period of time, then sending the code from the second device to the first device for verification;
- checking, by the first device, of the code received from the second device;
- if the code received by the first device is correct, transmitting the digital right management license of the first device to the second device and deactivating the digital right management license of the first device.

In accordance with a broad aspect, the digital right management license is transmitted to the second device from a distant server.

The present invention further relates to a device for transferring a digital right management-protected digital content comprising a contact point configured to detect its physical contact with a contact point of a second device and to enable sending a code from the said device to the said second device.

In accordance with a broad aspect the above device further comprises a contact communication unit configured to control the contact point, at least a standard communication functionality, means for transmitting a code, and means for retrieving a code from a distant server.

The present invention further relates to a computer program product adapted to perform the method cited above.

While the invention is susceptible to various modification and alternative forms, specific embodiments thereof have been shown by way of example in the drawings. It should be understood, however, that the description herein of specific embodiments is not intended to limit the invention to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### DETAILED DESCRIPTION OF ILLUSTRATIVE EMBODIMENTS

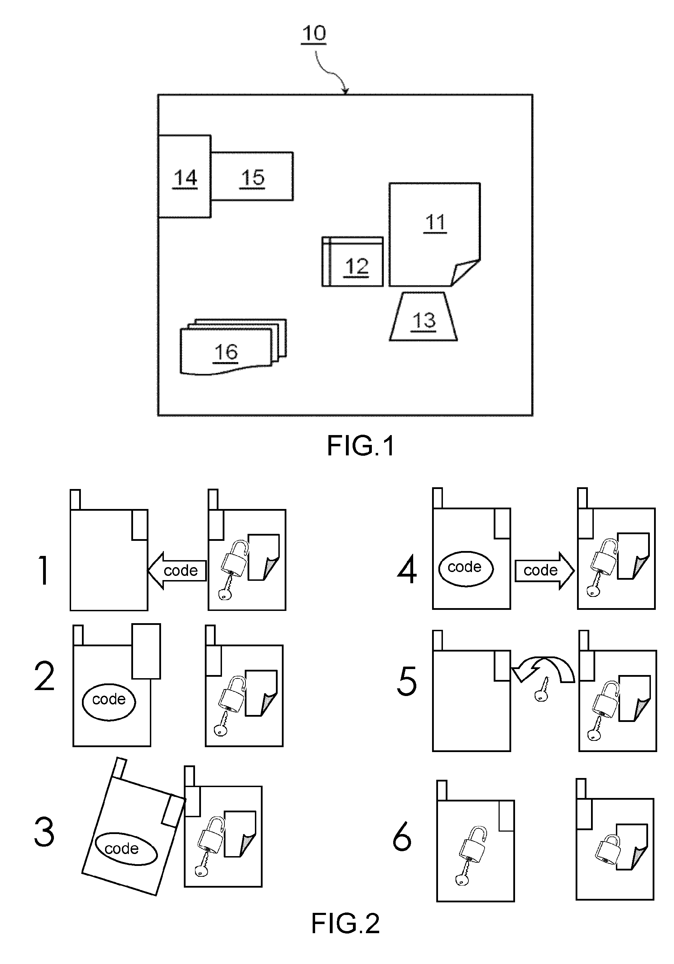

Figure 1 illustrates an end-user device **10** (a smartphone, a tablet computer, a personal digital assistant, a mobile/desktop computer, or any home entertainment device for example) comprising
- a protected digital content **11** by a DRM module **12** and its correspondent license **13.** The DRM-license **13** authorizes the use of the DRM module **12** which enables/disables the access to the digital content **11.** DRM systems generally incorporate encryption and usage conditions (terminal, account, usage time, payment, user name, serial number, watermark, print/read/save permission for examples) ;
- a contact point **14** under the control of a contact communication unit **15** that interacts with the rest of the main end-user device **10** components.

Further, the end-user device **10** comprises at least a standard communication functionality **16** such as Wi-Fi, Bluetooth®, GSM, or EDGE for example.

The contact point **14** is configured to detect its physical contact with a contact point of another device and to enable information/data exchange (sending/receiving a code for exemple) between these two devices according to a predefined protocol. The document EP2216910 *("Method and equipment for configuring radio communications",* Alcatel Lucent) describes an example of such a contact point equipment.

According to one embodiment, the transfer (i.e. the lending) of the DRM-protected digital content **11** from the first end-user device **10** to a second end-user device - in turn, provided with a contact point, a contact communication unit and a standard communication functionality - requires
- the physical contact of these two end-user devices; and
- that the DRM license **13** be transferable from the first end-user device **10** to the second one.

It is to be noted that, both above end-user devices have to be connected to a same communication area network (the same Wi-Fi hotspot, the same umbrella macro base station, the same femto-cell, the same Local Area Network for example), which has the effect to avoid piracy.

The transfer of the digital content **11** from the first device **10** to a second device is assured by means of devices touching (also known as devices toothing) through their contact points. The document EP2216910 *("Method and equipment for configuring radio communications",* Alcatel Lucent) discloses a method for data transfer in a secure way between mobiles devices when they are guaranteed to be in physical contact.

As an illustrative example consider the case, depicted in figure 2, wherein a user of a first mobile device (a smartphone for example) wishing to lend a DRM-protected digital content (an ebook for example) to a user of a second mobile device (a smartphone, a laptop, or a tablet for example). Thus, an ebook as a digital content is to be transferred from a first mobile device to a second mobile device while respecting its DRM constraints. Both mobile devices are equipped with compatible contact points and contact communications units that guarantee that the two devices have effectively made physical contact and the identification thereof.

Then, according to user instructions, a user interface may be displayed on the first mobile device for managing the transfer of the DRM-protected digital content (i.e. the ebook).

Under the control of the user, the first mobile device sends (using appropriate protocol) a lending code to the second mobile device, for example a 10 digit lending code, available for a short amount of time (e.g. 30 seconds) (step **1** in figure 2).

Subsequently, the second mobile device activates its contact communication unit and its contact point (step **2** in figure 2). If the first mobile device touches the second mobile device (i.e. a physical contact between the contact points of the first and second mobile) within the predefined amount of time (30 seconds for example) after sending the lending code (step **3** in figure 2), then the lending code is sent by the second mobile device to the first mobile device for verification (step **4** in figure 2).

Afterward, the first mobile device checks the lending code received from the second mobile device. If it is correct, the first mobile device transmits (step **5** in figure 2) the DRM-license to the second mobile device and at the same time its own DRM-license is deactivated (step **6** in figure 2).

Finally, the DRM-protected digital content is transmitted from the first mobile device to the second one via any appropriate communication channel (via the contact communication unit, or via the communication area network to which both mobile devices are connected for example). Alternatively, the second mobile device may receive (or download) the digital content to be lent from another source than from the first mobile device (from a distant server for example).

Advantageously, the above steps may be done in a transparent way for the user, who would only see a user-friendly display for lending or borrowing a digital content. DRM and transmission details may be hidden.

Advantageously, the required physical contact between end-user devices for DRM-protected digital contents transfer therebetween may avoid digital contents misappropriation via, for example, NFC techniques.

According to the above embodiment, DRM is stored on the end-user device. Alternatively, a centralized hosting method of DRM is adopted, permitting the transfer of digital contents between end-user devices in a centralized manner. In fact, a server keeps track of the association between devices identities and licenses. Advantageously, this provides an authentication before transferring a license from one device to another, while avoiding the use of a dongle.

A license - associated to a first mobile device and being known to a centralized server - may be transmitted to a second mobile device using the centralized server (a distant server) as follow:
- the user of the first mobile device chooses to transfer a license (or a DRM module) on a dedicated interface ;
- the first mobile device connects to the centralized server;
- using, for example, web services over HTTPS, the first mobile device tells the centralized server, after being uniquely identifier thereto, to transfer a license. In return, the first mobile device receives a server-generated unique identifier for the transfer (designated here as TID).
- the first mobile device signals to the second mobile device to start transfer and starts listening for contact ;
- if the first mobile device touches the second mobile device within 30 seconds after the signal, the TID is sent by the first mobile device to second one ;
- the second mobile device sends the TID to the centralized server ;
- the license is deactivated on the server for the first mobile device;
- the second mobile device gets the available license (the second mobile device may also receive the digital content, such as the ebook) ;
- the second mobile device now has the license, the first mobile device doesn't have it any more, and the centralized server has a trace of the whole operation making possible to find easily who has access to the digital content.

Advantageously, the last above-mentioned embodiment enables the grander of the license to keep track of each license, and guarantees that one license corresponds to one device only. Further, this embodiment permits to avoid the use of dongles, or more generally any other hardware means to counteract piracy.

Advantageously, the centralized server may keep track of content distribution and identify users who engage in illegal distribution.

It is to be noted that the above lending method of DRM-protected content is akin to a license transfer from one device to another.

Advantageously, the above described method of digital content lending excludes any widespread distribution. It authorizes the everyday operations that are historically associated to books such as lending or giving, acting as a social medium.

According to one aspect, the above described method respects the most restrictive acceptance of DRM, that only one device at a time may use a given DRM token (license, authorization for example).

According to another aspect, the above described methods simplifies digital content lending processes (for example, no need to perform complicated manipulation to lend a book), and strengthens security measures against piracy (certainly, the required physical contact between devices counteracts online piracy).

It is noteworthy to mention that advantageously, according to the above presented embodiments,
- consumers can not only buy the rights to use a copyrighted digital content but also the rights to lend it to other consumers in a license/DRM controlled manner;
- the rights of content providers are enforced and their business model is enhanced by imposing restrictions on the way that consumers distribute copyrighted contents ;
- digital contents may be transferred between end-user devices without need for intermediary memory such as a flash memory.

Persons skilled in the art will readily realize that the above described method fits well to digital contents (ebooks, movies, music files for example) lending via mobile handset devices.

## Claims

1. A method for transferring a digital right management-protected digital content from a first device (10) to a second device, said first and second devices respectively comprising a contact point (14), a contact communication unit (15) and a standard communication functionality (16), said digital content being protected by a digital right management module (12) and a digital right management license (13), said method comprising the following steps:
- sending a lending code from the first device to the second device;
- activating the contact point (14) and the contact communication unit (15) of the second device;
- if there is a physical contact between the contact point (14) of the first device and the contact point of the second device within a predefined period of time after sending the lending code, then sending the lending code from the second device to the first device for verification;
- checking, by the first device, of the lending code received from the second device;
- if the lending code received by the first device is correct, transmitting the digital right management license (13) of the first device to the second device and deactivating the digital right management license (13) of the first device.

2. The method of claim 1, further comprising a reception step, by the second device, of the digital right management-protected digital content.

3. The method of claim 1 or 2, wherein the code sent from the first device to the second device is retrieved by the first device from a distant server.

4. The method of any of claims 1 to 3, wherein the digital right management license (13) is transmitted to the second device from a distant server.

5. The method of claim 2, wherein the second device receive the digital right management-protected digital content via a communication area network to which both first and second devices are connected.

6. A device for transferring a digital right management-protected digital content comprising a contact point (14), a contact communication unit (15), a standard communication functionality (16) and a digital right management module (12) for protecting the digital content by a digital right management license (13), wherein the device is configured to
- send a lending code to a second device;
- detect its physical contact with a contact point of the second device;;
- receive and check the lending code sent by the second device;
- transmit the digital right management license (13) of said device to the second device, if the received lending code is correct;
- deactivate the digital right management license (13) of said device after transmitting the digital right management license (13).

7. The device of claim 6, further comprising a contact communication unit (15).

8. The device of claim 6 or 7, further comprising a standard communication functionality (16).

9. The device of any of claim 6 to 8, further comprising means for transmitting a code.

10. The device of any of claim 6 to 9, further comprising means for retrieving a code from a distant server.

11. The device of any of claims 6 to 8 is a smartphone.

12. The device of any of claim 6 to 8 is a tablet computer.

13. A computer program including instructions stored on a memory of a computer and/or a dedicated system, wherein said computer program is adapted to perform the method as claimed in preceding claims 1 to 5.

## Patentansprüche

1. Verfahren zur Übertragung digitaler Inhalte, die von einer digitalen Rechteverwaltung geschützt sind, von einem ersten Gerät (10) zu einem zweiten Gerät, wobei besagtes erstes und besagtes zweites Gerät jeweils eine Anschlussstelle (14), eine Kontakt-Kommunikationseinheit (15) und eine Standard-Kommunikationsfunktionalität (16) umfassen, wobei besagter digitaler Inhalt durch ein Modul für die digitale Rechteverwaltung (12) und durch eine Lizenz für die digitale Rechteverwaltung (13) geschützt ist, wobei besagtes Verfahren die folgenden Schritte umfasst:
- Senden eines Lending-Codes vom ersten Gerät an das zweite Gerät;
- Aktivieren der Anschlussstelle (14) und der Kontaktkommunikationseinheit (15) des zweiten Geräts;
- wenn innerhalb des vorgegebenen Zeitraums nach dem Senden des Lending-Codes ein physischer Kontakt zwischen der Anschlussstelle (14) des ersten Geräts und der Kontaktstelle des zweiten Geräts erfolgt, erfolgt nun das Senden des Lending-Codes vom zweiten Gerät an das erste Gerät zwecks Verifizierung;
- Prüfen des vom zweiten Gerät empfangenen Lending-Codes durch das erste Gerät;
- wenn der vom ersten Gerät empfangene Lending-Code korrekt ist, das Übertragen der Lizenz für die digitale Rechteverwaltung (13) vom ersten Gerät an das zweite Gerät und das Deaktivieren der Lizenz für die digitale Rechteverwaltung (13) des ersten Geräts.

2. Das Verfahren aus Anspruch 1, beim zweiten Gerät weiterhin einen Empfangsschritt für den Empfang der digitalen Inhalte umfassend, die von einer digitalen Rechteverwaltung geschützt sind.

3. Verfahren nach Anspruch 1 oder 2, wobei der vom ersten Gerät an das zweite Gerät gesendete Code vom ersten Gerät von einem entfernten Server abgerufen wird.

4. Das Verfahren nach einem jeglichen der Ansprüche 1 bis 3, wobei die Lizenz für die digitale Rechteverwaltung (13) an das zweite Gerät durch einen entfernten Server übermittelt wird.

5. Das Verfahren nach Anspruch 2, wobei das zweite Gerät die digitalen Inhalte, die von einer digitalen Rechteverwaltung geschützt sind, über ein Datenkommunikationsnetz übertragen werden, bei dem beide, das erste und das zweite Gerät, angemeldet sind.

6. Ein Gerät für die Übertragung digitaler Inhalte, die von einer digitalen Rechteverwaltung geschützt sind, eine Anschlussstelle (14), eine Kontakt-Kommunikationseinheit (15), eine Standard-Kommunikationsfunktion (16) und ein Modul für die digitale Rechteverwaltung (12) umfassend und das dem Schutz der digitalen Inhalte durch eine Lizenz für die digitale Rechteverwaltung (13) dient, wobei das Gerät konfiguriert ist für:
- das Senden eines Lending-Codes an das zweite Gerät;
- das Feststellen seines physischen Kontakts mit der Anschlussstelle des zweiten Geräts;
- das Empfangen und Prüfen des vom zweiten Gerät gesendeten Lending-Codes;
- das Übertragen der Lizenz für die digitale Rechteverwaltung (13) besagten Geräts an das zweite Gerät, sofern der empfangene Lending-Code korrekt ist;
- das Deaktivieren der Lizenz für die digitale Rechteverwaltung (13) besagten Geräts, nachdem die Lizenz für die digitale Rechteverwaltung (13) übermittelt wurde.

7. Das Gerät nach Anspruch 6, weiterhin eine Kontaktkommunikationseinheit (15) umfassend.

8. Das Gerät nach Anspruch 6 oder 7, weiterhin eine Standard-Kommunikationsfunktionalität (16) umfassend.

9. Das Gerät nach Anspruch 6 bis 8, weiterhin Mittel für das Übermitteln eines Codes umfassend.

10. Das Gerät nach Anspruch 6 bis 9, weiterhin Mittel für das Abrufen eines Codes von einem entfernten Server umfassend.

11. Wobei das Gerät nach einem jeglichen der Ansprüche 6 bis 8 ein Smartphone ist.

12. Wobei das Gerät nach einem jeglichen der Ansprüche 6 bis 8 ein Computer ist.

13. Ein Computerprogramm, im Speicher eines Computers oder geeigneten Systems Anweisungen umfassend, wobei besagtes Computerprogramm dafür ausgelegt ist, das Verfahren nach den vorgenannten Ansprüchen 1 bis 5 auszuführen.

## Revendications

1. Procédé de transfert d'un contenu numérique protégé par une gestion des droits numériques d'un premier dispositif (10) à un second dispositif, lesdits premier et second dispositifs comprenant respectivement un point de contact (14), une unité de communication de contact (15) et une fonctionnalité de communication standard (16), ledit contenu numérique étant protégé par un module de gestion des droits numériques (12) et une licence de gestion des droits numériques (13), ledit procédé comprenant les étapes suivantes :
envoyer un code de prêt du premier dispositif au second dispositif ;
activer le point de contact (14) et l'unité de communication de contact (15) du second dispositif ;
s'il existe un contact physique entre le point de contact (14) du premier dispositif et le point de contact du second dispositif dans une période temporelle prédéfinie après l'envoi du code de prêt, envoyer alors le code de prêt du second dispositif au premier dispositif pour vérification ;
vérifier, par le premier dispositif, le code de prêt reçu depuis le second dispositif ;
si le code de prêt reçu par le premier dispositif est correct, transmettre la licence de gestion des droits numériques (13) du premier dispositif au second dispositif et désactiver la licence de gestion des droits numériques (13) du premier dispositif.

2. Procédé selon la revendication 1, comprenant en outre une étape de réception, par le second dispositif, du contenu numérique protégé par une gestion des droits numériques.

3. Procédé selon la revendication 1 ou 2, dans lequel le code envoyé du premier dispositif au second dispositif est récupéré par le premier dispositif auprès d'un serveur distant.

4. Procédé selon l'une quelconque des revendications 1 à 3, dans lequel la licence de gestion des droits numériques (13) est transmise au second dispositif depuis un serveur distant.

5. Procédé selon la revendication 2, dans lequel le second dispositif reçoit le contenu numérique protégé par une gestion des droits numériques par le biais d'un réseau de communication auquel les premier et second dispositifs sont connectés.

6. Dispositif de transfert d'un contenu numérique protégé par une gestion des droits numériques, comprenant un point de contact (14), une unité de communication de contact (15) une fonctionnalité de communication standard (16) et un module de gestion des droits numériques (12), pour protéger le contenu numérique par une licence de gestion des droits numériques (13), le dispositif étant configuré pour
envoyer un code de prêt à un second dispositif ;
détecter son contact physique avec un point de contact du second dispositif ; recevoir et vérifier le code de prêt envoyé par le second dispositif ;
transmettre la licence de gestion des droits numériques (13) dudit dispositif au second dispositif, si le code de prêt reçu est correct ;
désactiver la licence de gestion des droits numériques (13) dudit dispositif après la transmission de la licence de gestion des droits numériques (13).

7. Dispositif selon la revendication 6, comprenant en outre une unité de communication de contact (15).

8. Dispositif selon la revendication 6 ou 7, comprenant en outre une fonctionnalité de communication standard (16).

9. Dispositif selon l'une quelconque des revendications 6 à 8, comprenant en outre des moyens de transmission de code.

10. Dispositif selon l'une quelconque des revendications 6 à 9, comprenant en outre des moyens de récupération d'un code depuis un serveur distant.

11. Dispositif selon l'une quelconque des revendications 6 à 8, le dispositif étant un smartphone.

12. Dispositif selon l'une quelconque des revendications 6 à 8, le dispositif étant une tablette informatique.

13. Programme informatique comprenant des instructions stockées sur une mémoire d'un ordinateur et/ou d'un système dédié, dans lequel ledit programme informatique est adapté pour exécuter le procédé selon les revendications précédentes 1 à 5.
